# EUROPEAN PATENT APPLICATION

(11) **EP 2 607 998 A1**
(43) Date of publication of application: **26.06.2013**
(21) Application number: 12197832.4
(22) Date of filing: 18.12.2012
(51) Int. Cl.: G06F 3/041, G06F 3/0488

(54) **Touch keypad module and mode switching method thereof**

(30) Priority: 23.12.2011 TW 100148400
(71) Applicant: eTurboTouch Technology Inc., Taoyuan County 32063 (TW); Wistron Corporation, New Taipei City 221 (TW)
(72) Inventor: Wang, Kuei-Ching, 325 Taoyuan County (TW); Lin, Ta-Hu, 112 Taipei City (TW)
(74) Representative: Becker Kurig Straus

(57) **Abstract**

A touch keypad module includes a touch input panel having a touch input surface and physically representing at least one specific touch zone. When the specific touch zone is touched while a touch gesture is inputted through the touch input surface, or when the specific touch zone is lastingly touched, the touch input panel switches its input mode.

## Description

### BACKGROUND OF THE INVENTION

### Field of Invention

The invention relates to an input apparatus and a processing method thereof and, in particular, to a touch input apparatus and a processing method thereof.

### Related Art

Various kinds of touch input apparatuses have been widely applied to many electronic products, such as a mobile phone and a tablet PC both using a touch screen as an input apparatus. When the touch screen displays virtual keys, a user can input characters or commands by touching these virtual keys in a manner as used to physical keys. Besides, the touch screen also displays source objects or a functional menu, so that the user can drag or select the object or touch the functional menu on the touch screen.

A conventional touch screen includes a display unit and a touch input panel that is disposed on a display surface of the display unit and cooperated with the display unit. For example, the display unit displays some figures so that the user can touch the areas of the touch input panel corresponding to the figures to make selections, or the display unit displays a mouse cursor that the user can move on the touch input panel. Accordingly, the display unit needs to display a complete or major keyboard, so that the touch screen can be used as a keyboard. Then, the user can touch the areas on the touch input panel corresponding to the keys to input information.

Accordingly, the main function of the touch screen is to display and provide a graphical interactive interface in type of a figure or a menu that the user can touch to input. However, if the user wants to input information in another input mode, the user needs to touch a switching menu to change the input mode. For example, if the user wants to input characters, a figure or a menu for switching input mode needs to be touched and thus the display unit displays a keyboard pattern with virtual keys that the user can touch. Once the figure or menu for switching input mode is designed improperly, the user can not find it intuitively or rapidly, so that the use efficiency is decreased.

Therefore, it is an important subject to provide a touch input module that can be operated independently and allow the user simply and rapidly switch the input mode.

### SUMMARY OF THE INVENTION

In view of the foregoing subject, an objective of the invention is to provide a touch keypad module and the mode switching method thereof that the user can simply and rapidly switch the input mode.

To achieve the above objective, a touch keypad module of the invention comprises a touch input panel having a touch input surface and physically showing at least one specific touch zone. When the specific touch zone is touched while a touch gesture is inputted through the touch input surface, the touch input panel switches its input mode according to the touch gesture.

To achieve the above objective, a touch keypad module of the invention comprises a touch input panel having a touch input surface and physically showing at least one specific touch zone. When the specific touch zone is touched lastingly, the touch input panel switches its input mode.

To achieve the above objective, the invention also discloses a mode switching method of a touch keypad module of the invention. The touch keypad module includes a touch input panel having a touch input surface and physically showing at least one specific touch zone. The mode switching method comprises the steps of: an input step to input a mode switching operation including inputting a touch gesture through the touch input surface while the specific touch zone is touched, or including lastingly pressing the specific touch zone; and a switching step to switch an input mode of the touch input panel according to the mode switching operation.

In one embodiment, the touch input panel determines a motion of the touch gesture, and switches the input mode, according to the motion, to a touch input mode assigned to the motion.

In one embodiment, the touch input panel determines a motion of the touch gesture, and switches the input mode, according to the motion, to another touch input mode.

In one embodiment, the touch input panel determines a motion of the touch gesture, and switches the input mode, according to the motion, to a former touch input mode.

In one embodiment, the input mode of the touch input panel is a key input mode or a track input mode, and the touch input panel physically shows a plurality of input zones that are capable of generating effective inputs on the touch input surface in the key input mode. The input mode of the touch input panel is selectively switched to the key input mode or the track input mode according to the touch gesture. The input zones functioning as keys are physically defined on the touch input panel. For example, the border, the character, or the symbol can be formed on the input zone so that the user can recognize the key easily.

In one embodiment, the zones on the touch input surface capable of generating the effective inputs are not limited to the input zones in the track input mode.

In one embodiment, the input signal in the key input mode is corresponding to a key data, and the input signal in the track input mode is corresponding to a track data.

In one embodiment, the specific touch zone can be represented as a key. Otherwise, the specific touch zone can be represented as a marked range instead of a key.

In one embodiment, an interval is disposed between two of the input zones.

In one embodiment, the touch input panel is a resistive touch panel or a capacitive touch panel.

As mentioned above, in the touch keypad module and the mode switching method thereof of the invention, the user can conveniently touch the specific touch zone and make a specific touch gesture at the same time to simply and rapidly switch the input mode. Besides, the touch input panel can be selectively operated in the key input mode or the track input mode, so that the touch keypad module can provide the key input function and the track input function.

### BRIEF DESCRIPTION OF THE DRAWINGS

The invention will become more fully understood from the detailed description and accompanying drawings, which are given for illustration only, and thus are not limitative of the present invention, and wherein:

FIGS. 1A and 1B are schematic diagrams of a touch keypad module of a preferred embodiment of the invention;

FIGS. 2A and 2E are other schematic diagrams of the touch keypad module of the preferred embodiment of the invention;

FIG. 3 is a block diagram of the touch keypad module of the preferred embodiment of the invention;

FIG. 4 is a schematic top-view diagram showing partial structure of the touch input panel of the preferred embodiment of the invention; and

FIG. 5 is a flow chart of the mode switching method of the touch keypad module of the preferred embodiment of the invention.

### DETAILED DESCRIPTION OF THE INVENTION

The present invention will be apparent from the following detailed description, which proceeds with reference to the accompanying drawings, wherein the same references relate to the same elements.

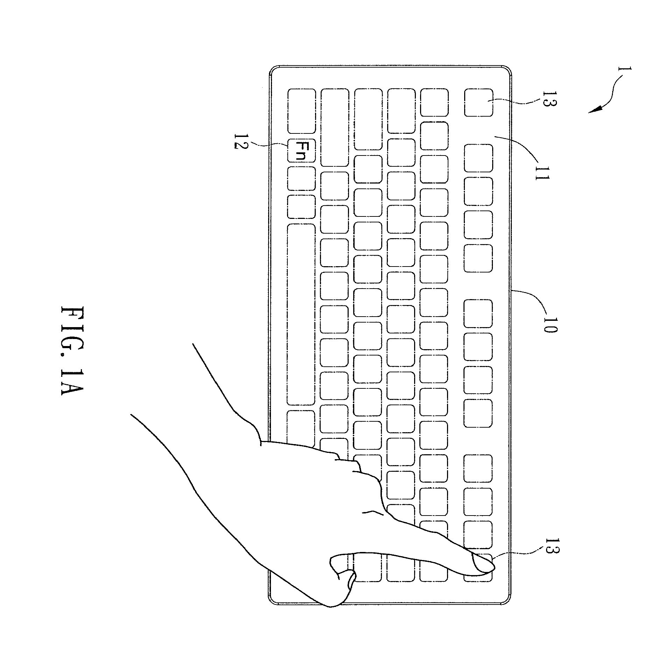

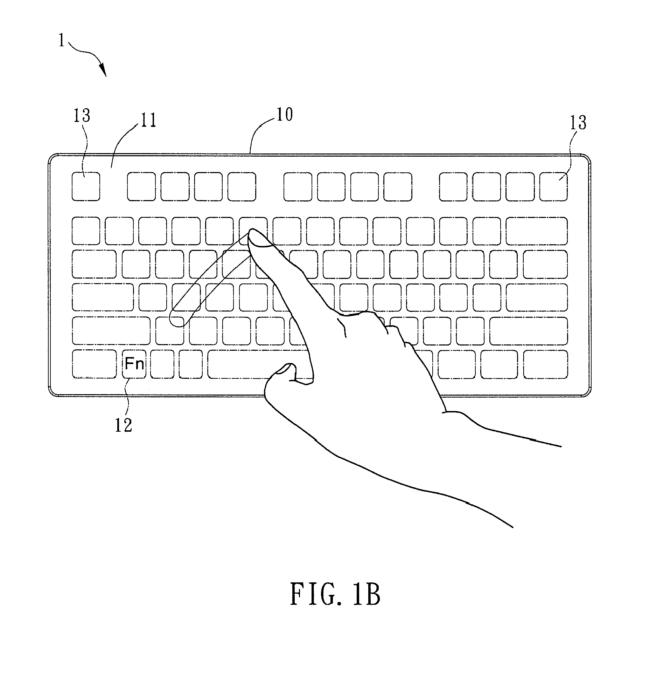

FIGS. 1A and 1B are schematic diagrams of a touch keypad module of a preferred embodiment of the invention. As shown in FIGS. 1A and 1B, the touch keypad module 1 includes a touch input panel 10, which has a touch input surface 11 and physically represents at least one specific touch zone 12 and a plurality of input zones 13. Each of the input zones 13 and the specific touch zone 12 can respectively generate input signals according to the user's touch.

When the touch input panel 10 receives the mode switching operation conducted by the user, the touch input panel 10 switches an input mode according to the mode switching operation. The mode switching operation is formed by touching the specific touch zone and inputting a touch gesture, or by lastingly pressing the specific touch zone.

For example, when the specific touch zone 12 is touched while a touch gesture is inputted through the touch input surface 11, the touch input panel 10 switches the input mode according to the touch gesture. Otherwise, when a specific touch zone (such as the specific touch zone 12) is pressed lastingly, the touch input panel 10 switches the input mode. The touch input panel 10 can be designed with at least one of the above switching operations.

The touch input panel 10 can be designed with multiple input modes, each of which is corresponding to each of the mode switching operations. The input modes include, for example, different track input modes, or the combination of the key input mode and the track input mode.

In the embodiment, the specific touch zone 12 and the input zone 13 are both represented as a key. Otherwise, the specific touch zone 12 needn't to be represented as a key, but can be represented as a marked range.

For example, the touch keypad module 1 can selectively provide a key input mode (as shown in FIG. 1A) or a track input mode (as shown in FIG. 1B), and can be used as a keyboard, a mouse, or a digital board. The user can select the desired input mode or application by the mode switching operation conducted on the touch input surface 11.

As shown in FIG. 1A, in the key input mode, the input zones 13 and the specific touch zone 12 are defined as capable of generating effective input signals on the touch input surface 11. Each of the input zones 13 and the specific touch zone 12 are independent keys, each of which generates the individual input signal. In this mode, the zone on the touch input surface 11 except the input zone 13 and the specific touch zone 12 can not generate effective input signal.

In the embodiment, the touch keypad module 1 can be used as a keyboard with a standard keyboard arrangement. The input zones 13 represent the standard keyboard's keys including "A" to "Z", F1∼F12, "ALL", "Ctrl", "Space", "Enter", "Backspace", "Home", "End", "Page Up", and "Page Down", or the like. Each of the input zones 13 is located on the touch input panel 10 in the manner as each of the keys represented by the input zones 13 is located on the standard keyboard. The specific touch zone 12 can be a function key (Fn).

As shown in FIG. 1B, in the track input mode, the touch keypad module 1 can be regarded as a track input apparatus, such as a trackpad or a handwriting pad. The user can move the finger or a stylus to make a track input on the touch input surface 11. In this mode, the zone on the touch input surface 11 that can generate the effective input is not limited to the input zone 13. The position information of the touch input can be represented by coordinates (absolute coordinates or relative coordinates) or displacements. For example, when the touch input surface 11 is partially or totally used as a touchpad capable of the mouse function, the position information is represented by the displacements, and in other words, the touch keypad module 1 outputs the displacement data according to the user's touch input. When the touch input surface 11 is partially or totally used as a digital board, the position information is represented by the coordinates, and in other words, the touch keypad module 1 outputs the coordinate data according to the user's touch input.

When the specific touch zone 12 is touched while a touch gesture is inputted through the touch input surface 11, the touch input panel 10 switches the input mode according to the touch gesture. For example, the input mode is switched to an assigned, a next, or a former touch input mode. Thus, the touch input panel 10 can process input signals generated by an input zone 13 in different input modes. The input signal is corresponding to a key data in the key input mode, and corresponding to a track data in the track input mode. The track data includes position information generated by the track input. The position information describes or records the path of the track input.

Therefore, the user can conveniently switch the input mode by the touch gesture and/or the specific touch zone 12 on the touch input surface 11.

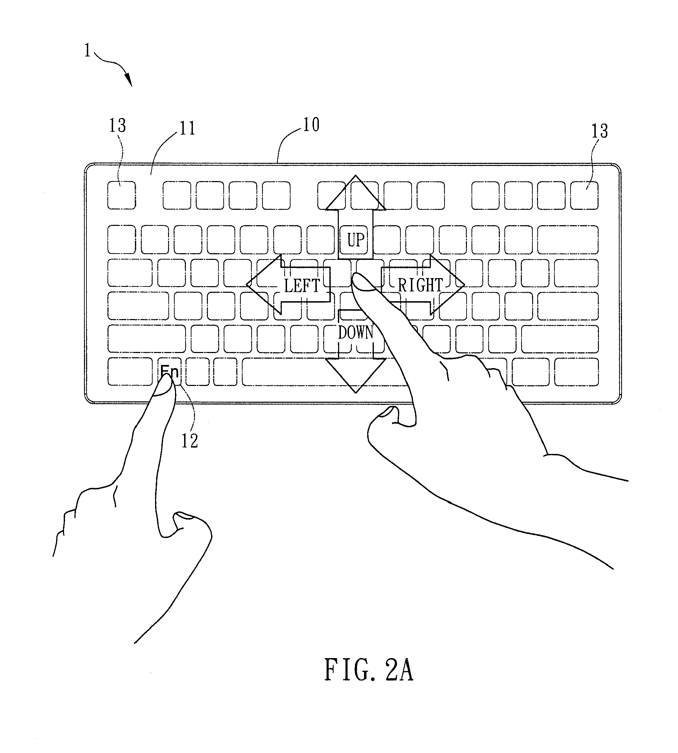

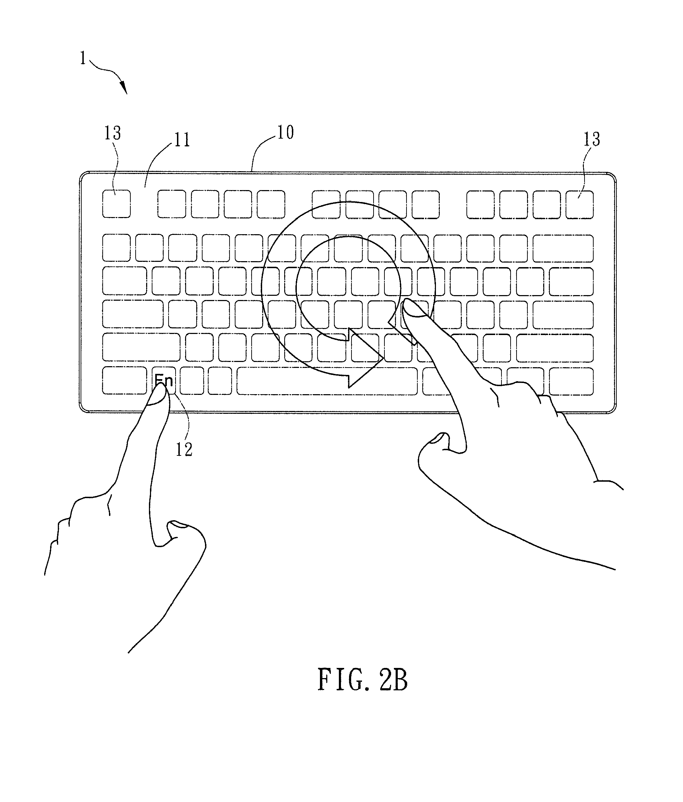

As shown in FIGS. 2A and 2B, the touch gesture can include sliding or making a circle. When the specific touch zone 12 is touched while the touch gesture is inputted through the touch input surface 11, the touch input panel 10 determines the motion of the touch gesture, and switches the input mode, according to the motion, to a touch input mode assigned to the motion, or to another touch input mode.

For example, a specific motion of the touch gesture is corresponding to an assigned input mode. It is supposed that the touch input panel 10 has N kinds of input modes, and N is equivalent to 3 for example. As shown in FIG. 2A, when the specific touch zone 12 is touched, the touch input panel 10 will go to a first input mode if the touch gesture is an upward motion, the touch input panel 10 will go to a second input mode if the touch gesture is a leftward motion, and the touch input panel 10 will go to a third input mode if the touch gesture is a rightward motion. The first to third input modes can be a key input mode (providing a keyboard function), a first track input mode (providing a touchpad or mouse function), and a second track input mode (providing a handwriting or digital-board function), respectively. The outcome of the first track input mode includes displacement data, and the outcome of the second track input mode includes coordinate data.

Besides, a specific motion of the touch gesture can cause the touch input mode to be switched from the present input mode to the next input mode. It is supposed that the touch input panel 10 has N kinds of input modes, and N is equivalent to 3 for example. When the specific touch zone 12 is touched while the motion of the touch gesture is to make a circle as shown in FIG. 2B or a downward movement as shown in FIG. 2A, the touch input mode will be switched in a switching sequence, such as from the first to the Nth input mode.

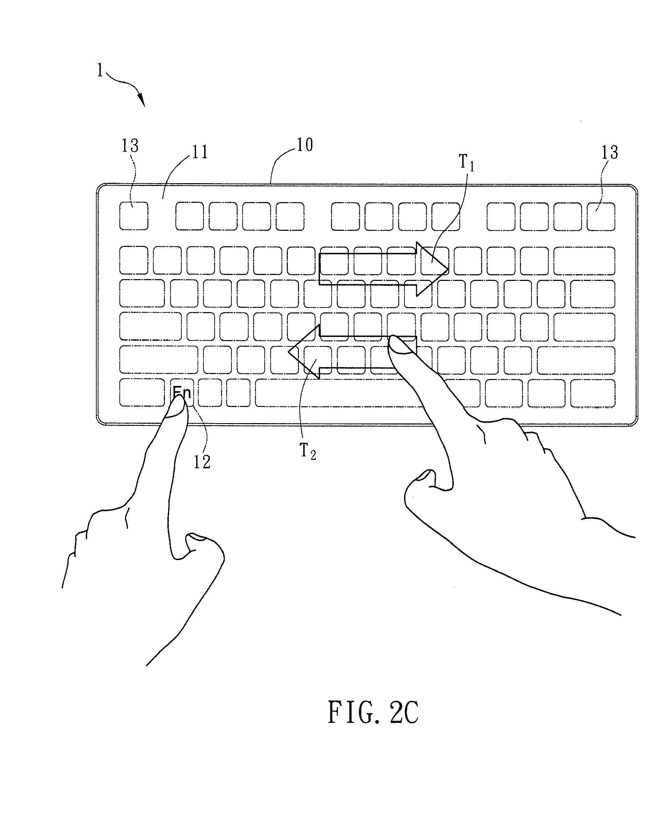

Besides, the touch input panel 10 can switch the present input mode to the former touch input mode according to the motion of the touch gesture. As shown in FIG. 2C, the user touches the specific touch zone 12 on the touch input surface 11 while making a motion T1 of the touch gesture to switch the input mode to an assigned input mode or the next input mode. Then, the user touches the specific touch zone 12 on the touch input surface 11 and makes a motion T2 of the touch gesture, opposite to the motion T1, to switch the input mode to the original input mode, the input mode before making the motion T1. For example, the motion T1 is the movement towards a direction, and the motion T2 is the movement towards the opposite direction. The motion T1 and the motion T2 can be the leftward and rightward movements respectively, the upward and downward movements respectively, or the diagonal movements. Besides, the motion T1 and the motion T2 can be the rotational movements, and for example, the motion T1 and the motion T2 are a clockwise and counterclockwise movements respectively. No matter the former touch gesture is an unidirectional movement, a rotational movement, or other kind of movement, the touch input panel 10 will go back to the former touch input mode when the present motion of the touch gesture is opposite to the motion of the former touch gesture.

As shown in FIGS. 2A and 2C, the user can press the specific touch zone 12 with the left hand, and makes a touch gesture in the midst of the touch input surface 11 with the right hand, to switch the input mode. Accordingly, although an additional device is not disposed in the midst of the touch input surface 11, the mode switching function can be provided in the midst of the touch input surface 11.

Besides, the user can lastingly press at least one specific touch zone to switch the input mode of the touch input panel.

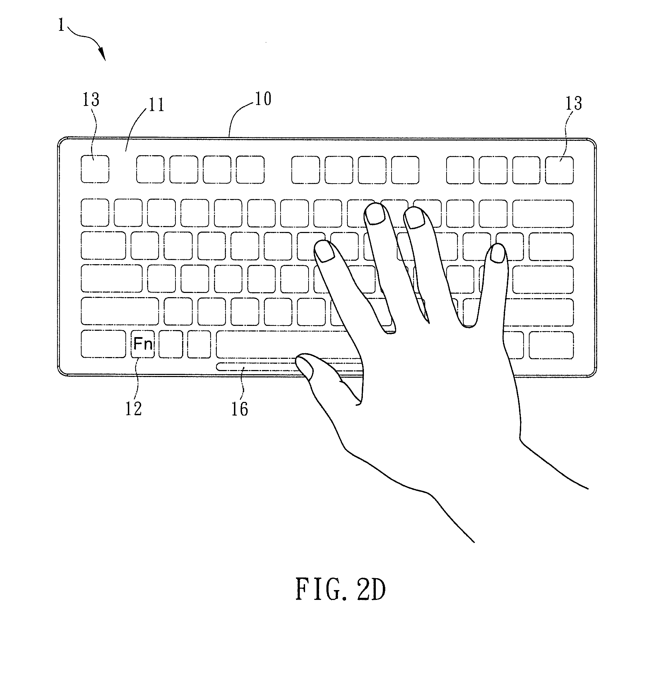

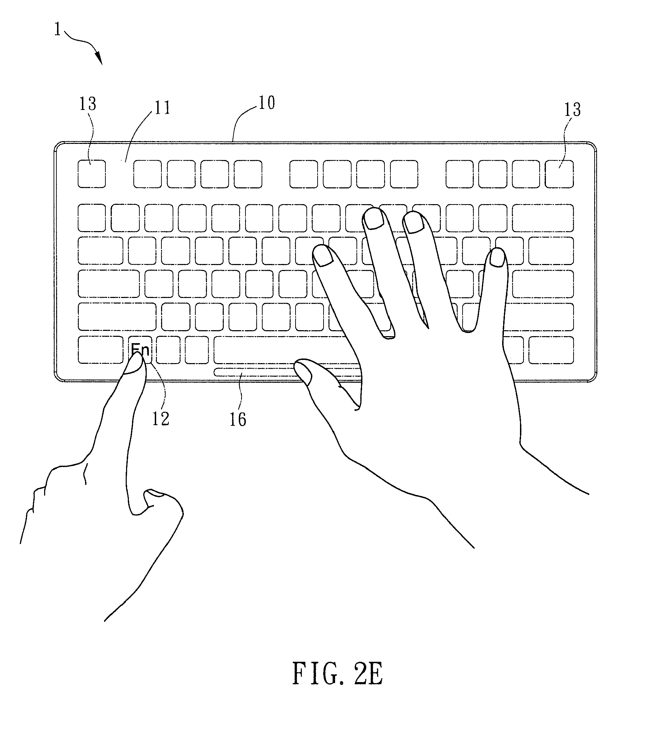

FIGS. 2D and 2E are other schematic diagrams of the touch keypad module of the preferred embodiment of the invention. As shown in FIGS. 2D and 2E, a specific touch zone 16 is not lain over the input zones, but disposed outside the input zones functioning as keys. In the embodiment, the specific touch zone 16 doesn't belong to a key of the standard keyboard, so that it will not affect the arrangement of the input zones arranged in conformity with the standard keyboard. The specific touch zone 16 is disposed below the "space" key, and can be conveniently operated by the user's thumb or other fingers. The specific touch zone 16 also can be disposed at another place where the input zones are not disposed.

As shown in FIG. 2D, the user only lastingly presses the specific touch zone 16 to switch the input mode of the touch input panel 10. As shown in FIG. 2E, the user lastingly presses the specific touch zones 12 and 16 at the same time to switch the input mode of the touch input panel 10. In FIGS. 2D and 2E, the lasting pressing means an unceasing touch for a certain time. For example, if the specific touch zone 16 is unceasingly touched for more than a predetermined time, it can be considered as being pressed lastingly. The predetermined time can be defined as a touch response time of the input zone 13 that is taken for generating an effective input signal by the touch motion.

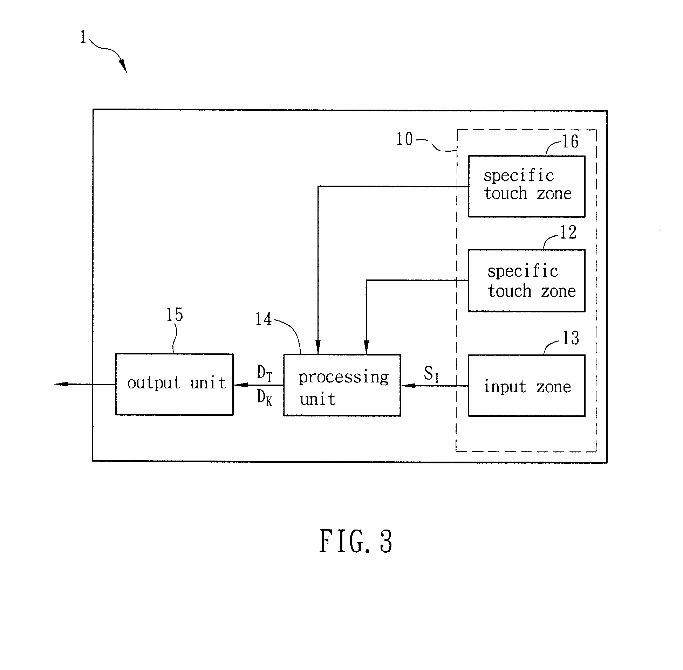

As shown in FIG. 3, the touch keypad module 1 further includes a processing unit 14 and an output unit 15, both of which can be disposed to the touch input panel 10. The processing unit 14 can process the signal S_{I} output from the input zone 13 to produce the key data D_{K} or the trace data D_{T} that can be output by the output unit 15. The key data D_{K} or the trace data D_{T} can be transmitted to an electronic apparatus, such as a desktop computer, a notebook, or a tablet PC or other computing apparatuses, or to an electronic apparatus capable of receiving information, such as a personal digital assistant (PDA) or a smart phone.

The touch gesture input through the touch input surface 11 and the input signal generated from the specific touch zone 12 are processed by the processing unit 14. The processing unit 14 can switch the input mode according to the touch gesture. The output unit 15 is electrically connected to the processing unit 14. The touch keypad module 1 can further include a memory unit which can store the characteristic motions corresponding to all kinds of the touch input modes. The processing unit 14 can, based on the characteristic motions, determine the touch input mode corresponding to the motion of the touch gesture.

The processing unit 14 processes the input signal generated by the mode switching operation to switch the input mode. The mode switching operation as mentioned above can include lastingly pressing the specific touch zone 16, or lastingly pressing the specific touch zones 12 and 16, for example.

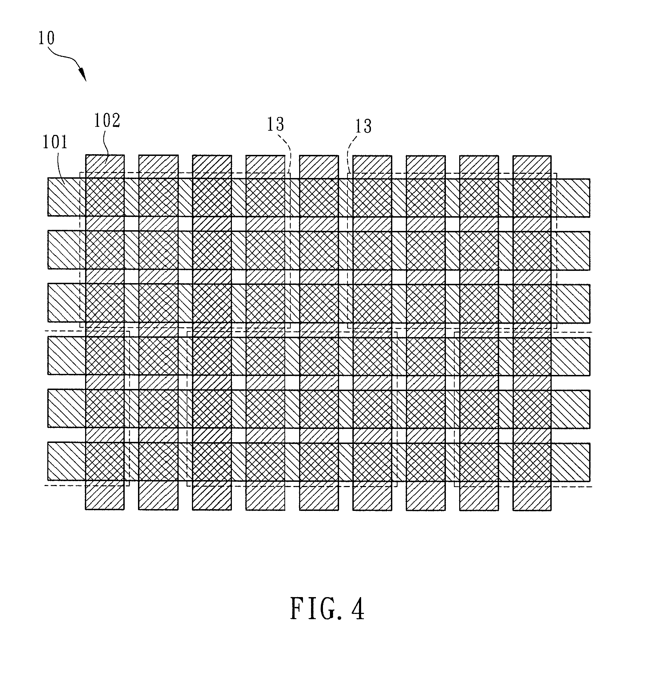

FIG. 4 is a schematic top-view diagram showing partial structure of the touch input panel 10 of the preferred embodiment of the invention. The touch input panel 10 can include a plurality of row wires 101 and column wires 102, which are intersected with each other. Each of the input zones 13 covers at least one intersection point of the row wires 101 and the column wires 102. An interval is disposed between two of the input zones 13. Partial intersection points of the row wires 101 and the column wires 102 are not covered by any input zone 13, but disposed within the interval. The row wires 101 and the column wires 102 can be made of transparent conducting material, such as indium tin oxide (ITO) or a high polymer conducting material.

The touch input panel 10 can be a digital matrix resistive touch panel, in which the row wire 101 and the column wire 102 will conduct each other at the intersection point, when pressed by the user, to generate an input signal that is transmitted to the processing unit through the row wire 101 and the column wire 102 forming the intersection point. In the touch input panel 10, different pressures provided by the user can be distinguished for avoiding erroneous touches.

In the key input mode, only the signal generated by the intersection point within the input zone 13 is regarded as an effective input, and the signal generated by the intersection point within the interval is not regarded as an effective input, thereby making a simulated key input effect. In the track input mode, either the signal generated by the intersection point within the input zone 13 or within the interval is regarded as the effective input, so that the touch input panel can be used as a handwriting pad.

The touch input panel is not limited to a resistive touch panel or a capacitive touch panel. No matter what kind of the touch input panel is, the touch input surface of the touch input panel includes a plurality of defined touch input points, such as corresponding to the above-mentioned intersection points, and each of the touch input point is not covered by two or more input zones. Although the touch input points uncovered by the touch keys are not regarded as the effective touch input points in the key input mode, they can be regarded as the effective touch input points in the track input mode.

In the above embodiments, the input zones of the touch keypad module 1 are not displayed by a display apparatus. Instead, the input zones 13 and the specific touch zone 12 are directly formed on the touch input panel 10 and can respectively receive the input. In other words, the input zones 13 and the specific touch zone 12 functioning as the keys are physically defined on the touch input surface. The input zones 13 and the specific touch zone 12 can show their corresponding keys respectively. For example, the border, the character or the symbol pattern of the key can be formed on the inner surface, the outer surface, the inner layer, or the outer layer of the input zone 13 and the specific touch zone 12, so that the user can easily recognize them. They can be formed by printing or carving, or by disposing, in conformity with the character or symbol pattern, the phosphor powder or dye in the input zone 13 and the specific touch zone 12.

Touch input panel 10 mainly includes two plates separated by a spacer. A conducting layer is disposed at the inner side of each of the two plates, forming a plurality of row wires and column wires after being patterned. Each of the two plates can be a substrate or a film. The substrate can be a glass substrate or a plastic substrate, and can be made of Polymethylmethacrylate (PMMA) or Polycarbonate (PC) for example. Each of the pattern of the input zones 13 or the specific touch zones 12 can be formed on one of the plates by printing. The material of the pattern can be phosphor powder or dye that is arranged in conformity with the corresponding character or symbol.

In the above embodiments, the touch keypad module is not limited to the key arrangement of a standard keyboard, but can be arranged in a proper type according to the practical requirement, such as arranged in type of a numeral keyboard. Besides, the touch input panel can be a flexible panel.

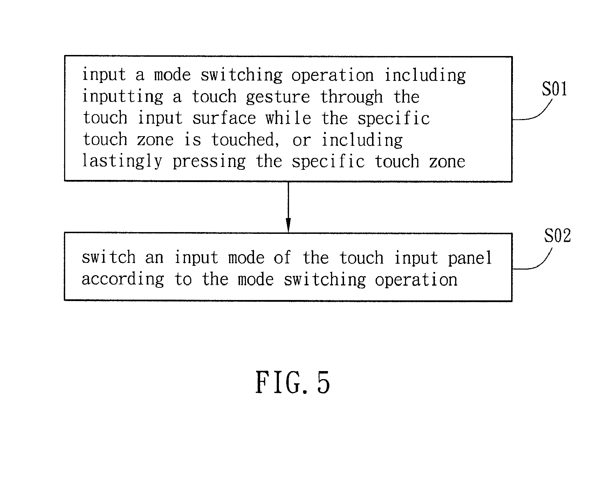

As shown in FIG. 5, the mode switching method of the touch keypad module of the preferred embodiment of the invention includes an input step S01 and a switching step S02. The touch keypad module includes a touch input panel that has a touch input surface and physically shows at least one specific touch zone. The input step S01 is to input a mode switching operation, such as inputting a touch gesture through the touch input surface while the specific touch zone is touched, or as lastingly pressing the specific touch zone. The switching step S02 is to switch the input mode of the touch input panel according to the mode switching operation.

The mode switching method can be applied to the touch keypad modules as mentioned in the above embodiments, and the related variations and details of the method are similar to the usage or operation procedure of the touch keypad modules of the above embodiments, so they are omitted here.

In summary, in the touch keypad module and the mode switching method thereof of the invention, the user can conveniently touch the specific touch zone and make a specific touch gesture at the same time to simply and rapidly switch the input mode. Besides, the touch input panel can be selectively operated in the key input mode or the track input mode, so that the touch keypad module can provide the key input function and the track input function.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. A touch keypad module, comprising:
a touch input panel having a touch input surface and physically showing at least one specific touch zone,
wherein when the specific touch zone is touched while a touch gesture is inputted through the touch input surface, the touch input panel switches its input mode according to the touch gesture.

2. The touch keypad module as recited in claim 1, wherein the touch input panel determines a motion of the touch gesture, and switches the input mode, according to the motion, to a touch input mode assigned to the motion.

3. The touch keypad module as recited in claim 1, wherein the touch input panel determines a motion of the touch gesture, and switches the input mode, according to the motion, to another touch input mode.

4. The touch keypad module as recited in claim 1, wherein the touch input panel determines a motion of the touch gesture, and switches the input mode, according to the motion, to a former touch input mode.

5. The touch keypad module as recited in claim 1, wherein the input mode of the touch input panel is a key input mode or a track input mode, and the touch input panel physically shows a plurality of input zones that are capable of generating effective inputs on the touch input surface in the key input mode.

6. The touch keypad module as recited in claim 5, wherein the zones on the touch input surface capable of generating the effective inputs are not limited to the input zones in the track input mode.

7. The touch keypad module as recited in claim 6, wherein the input signal in the key input mode is corresponding to a key data, and the input signal in the track input mode is corresponding to a track data.

8. The touch keypad module as recited in claim 5, wherein an interval is disposed between two of the input zones, and the touch input panel further includes:
a plurality of row wires and column wires intersected with each other,
wherein each of the input zones covers at least one intersection point of the row wires and the column wires.

9. A touch keypad module, comprising:
a touch input panel having a touch input surface and physically showing at least one specific touch zone,
wherein when the specific touch zone is touched lastingly, the touch input panel switches its input mode.

10. A mode switching method of a touch keypad module that includes a touch input panel having a touch input surface and physically showing at least one specific touch zone, comprising:
an input step to input a mode switching operation including inputting a touch gesture through the touch input surface while the specific touch zone is touched, or including lastingly pressing the specific touch zone;
a switching step to switch an input mode of the touch input panel according to the mode switching operation.
